# EUROPEAN PATENT SPECIFICATION

(11) **EP 0 718 160 B1**
(45) Date of publication and mention of the grant of the patent: **29.03.2000**
(21) Application number: 95119477.8
(22) Date of filing: 11.12.1995
(51) Int. Cl.: B60R 21/00, B60R 16/02

(54) **Air bag activating system and a strain relief sleeve therefor**
Aktivierungssystem für einen Luftsack und eine Zugentlastungsmuffe für dieses System
Système d'acitvation d'un sac gonflable et une gaine d'atténuation de contrainte pour ce système

(30) Priority: 19.12.1994 GB 9425584
(43) Date of publication of application: 26.06.1996
(73) Proprietor: THE WHITAKER CORPORATION, Wilmington, Delaware 19808 (US)
(72) Inventor: Langridge, Gary, St. Albans, Hertfordshire A12 1TN (GB)
(74) Representative: Heinz-Schäfer, Marion

(56) References cited:
- EP-A- 0 444 584
- DE-A- 3 641 706
- DE-A- 4 235 056
- GB-A- 2 222 326

## Description

This invention relates to an air bag activating system with a strain relief.

The present invention concerns, in particular, an air bag activating system in a vehicle having a steering column with a fixed outer shaft containing a cassette which is rotatable with the steering wheel of the vehicle. The cassette contains an electrically actuable air bag activating assembly, a coil of multiconductor flat flexible cable being disposed between the cassette and the outer shaft of the steering column. The coil has a first lead portion connected to crash sensors outside the shaft and a second lead portion extending freely through an opening in the cassette. An electrical connector for mating with the air bag actuating assembly contains electrical terminals each connected to a respective conductor of the second lead portion. The coil of the flat flexible cable is coilable and uncoilable to compensate for the rotation of the steering wheel when the connector is mated wit the air bag activating assembly.

GB-A-2 222 326 (on which the preamble of claim 1 is based) discloses an electrical connector system for mounting on a steering wheel of a motor-vehicle to connect with an airbag therein. The connector incorporates a flat cable which in a central region is coiled to form a flat spiral with the ends bent to extend out of the spiral at substantially right angles. The ends of the flat cable are encased in a sheathing of insulating material to provide additional tensile strength.

EP 0 444 584 A discloses a current connection device for a steering column of a motor-vehicle that includes a flat conductor cable mounted in a spiral with ends extending away at 90°. In order to mechanically strengthen the cable in the transitional regions between the spiral and the ends, the cable is enclosed in a plastic sheathings.

According to a prior proposal, the second lead portion is provided with a strain relief sleeve moulded over the second lead portion and being therefore fixed thereto. It may, from time to time, be necessary for the connector to be unmated from the air bag activating assembly in order to allow testing of the crash sensors or, for example, the exchange of a gas generator cylinder of the assembly, for inflating the air bags. Under such circumstances, it may often occur that the connector is pulled in a direction away from the cassette with the risk of the connections between the cable conductors and the terminals of the connector, being impaired, given that the strain relief sleeve is fixed to the second lead portion. These connections will usually be crimped connections according to the teaching of US-A-4,106,836, for example.

The present invention consists in an air bag activating system in a vehicle having a steering column with a fixed outer shaft containing a cassette which is rotatable with the steering wheel of the vehicle, and an electrically actuable air bag activating assembly in the cassette, a coil of multi-conductor flat flexible cable between the cassette and the outer shaft having a first lead portion connected to crash sensors outside the shaft and a second lead portion extending freely through an opening in the cassette, an electrical connector for mating with the air bag activating assembly containing electrical terminals each connected to a respective conductor of the second lead portion, the coil of flat flexible cable being coilable and uncoilable to compensate for the rotation of the steering wheel when the connector is mated with said assembly, wherein a strain relief sleeve defining a passage through which a second lead extends is fixed at one end to the cassette and at its other end to the connector, the strain relief sleeve being stiffly extensible to absorb the load when the connector is pulled away from the cassette and the passage being dimensioned to allow the cable to pass freely therethrough, thereby to relieve the connections between the cable conductors and the terminals of the load when the connector is so pulled.

When the connector is pulled, therefore, cable is drawn from the coil so that no pull is exerted on the connections between the cable conductors and the terminals.

In order to ensure freedom for the cable to be drawn from the coil, the passage defined by the strain relief sleeve preferably has twice the height of the cable thickness which will usually be about 0.25mm. For economy of the material of the strain relief sleeve, which may, for example, be a soft nylon, the sleeve preferably comprises a pair of spaced, flat lattice structures formed integrally with a pair of spaced, parallel support strips, inner surfaces of the lattice structures and the support strips defining the passage of the strain relief sleeve, and serving to confine the flat flexible cable. Such a strain relief sleeve can readily be produced as a single injection moulded part, by means of a simple two part tool.

An advantageous strain relief for the system consists in a one piece, moulded, elongate, strain relief sleeve made of a stiffly resilient material, comprising a pair of spaced, parallel, longitudinally extending support strips connected together by a pair of spaced, longitudinally extending flat, parallel, lattice structures, each connected to both of said strips, the strips and the lattice structures cooperating to define a longitudinal through passage of elongate cross section for receiving with clearance, a length of flat flexible cable, attachment means being provided at each end of the sleeve.

Preferably, each lattice structure comprises a series of V-shaped struts, apices of the struts of each lattice structure being connected to the inner side of a respective one of the support strips and the legs of the struts of each lattice structure being connected to an edge of a respective other one of the support strips. The expansibility of the strain relief sleeve can be limited by connecting each leg of each V-shaped strut to a corresponding leg of an adjacent V-shaped strut, by means of a base formed integrally with the respective support strip. Since two lattice structures are arranged in rotational symmetry, each support strip is thereby of increased cross section.

An embodiment of the present invention will now be described by way of example with reference to the accompanying drawings in which:
Figure 1 is an explanatory diagram of an air bag activating system in an automotive vehicle, showing parts of the system in a first angular position of the steering wheel of the vehicle;
Figure 2 is a similar view to that of Figure 1 but showing the parts in a second angular position of the steering wheel;
Figure 3 is an enlarged fragmentary diagram showing a strain relief sleeve according to an embodiment of the invention, applied to the air bag activating system;
Figure 4 is a diagrammatic cross sectional view through the strain relief sleeve;
Figure 5 is an enlarged isometric view of the strain relief sleeve;
Figure 6 is an enlarged isometric view of the strain relief sleeve in longitudinal section and showing a fragment of flat flexible cable;
Figure 7 is an enlarged, exploded isometric view of the body of an electrical connector of the air bag actuating system; and
Figure 8 is an isometric view showing the connector body with a cover, the strain relief sleeve and the flat flexible cable assembled thereto, the strain relief sleeve being shown only diagrammatically.

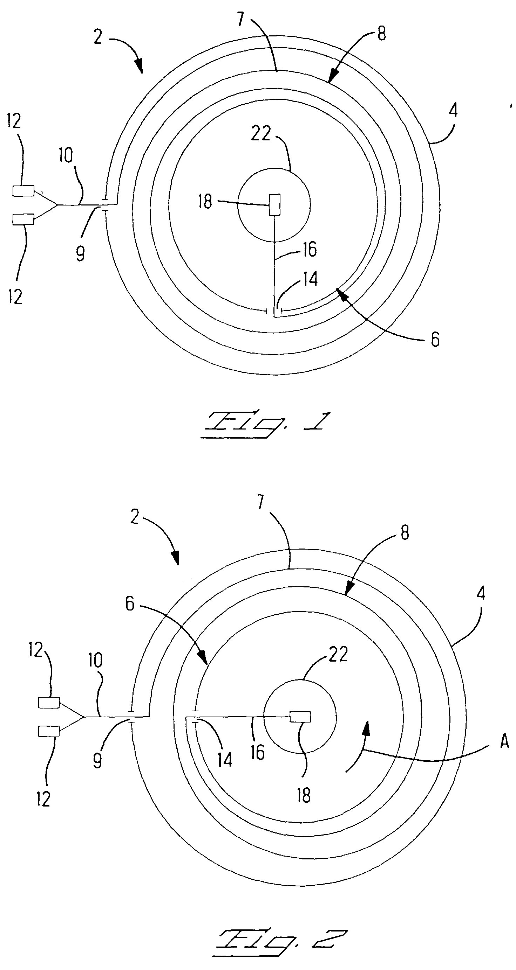

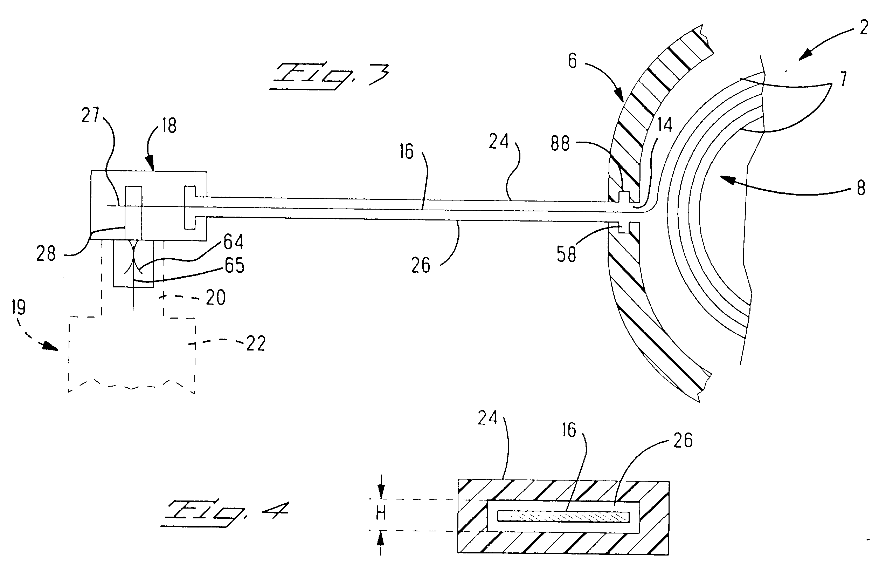

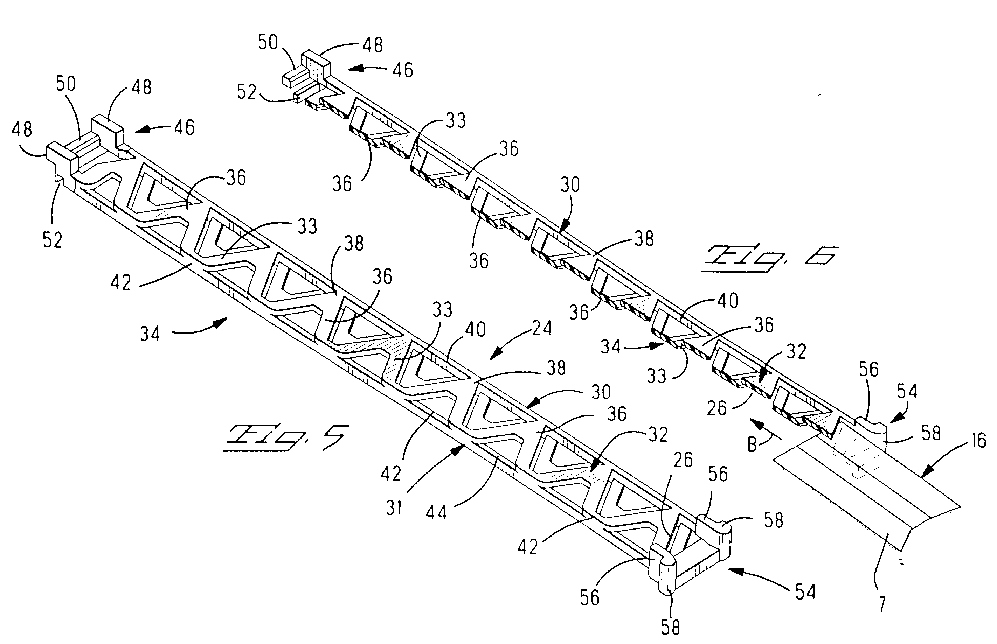

As shown diagrammatically in Figures 1 and 2, a steering column 2 of an automotive vehicle comprises a fixed, radially outer shaft 4 clamped, for example, to the dash board of the vehicle, and a radially inner cassette 6 within the shaft 4 and which is rotatable with the steering wheel of the vehicle. Confined between the cassette 6 and the shaft 4 is a coil 8 of multi conductor flat flexible cable FFC 7. There extends from the radially outer end of the coil 8, through an opening 9 in the fixed shaft 4, a first lead portion 10 which is connected to crash sensors 12 in the forward part of the vehicle. There extends from the radially inner end of the coil 8, through an opening 14 in the cassette 6, a second lead portion 16 which is connected at its radially inner end to terminals 28 (Figure 3) of a first electrical connector 18 which is mated with a second electrical connector 20 (Figure 3) of an electrically actuated, air bag activating assembly 19. The connector 20 is for supplying activating voltage from the sensors 12 to an electrically actuable device (not shown) for causing a gas generator cylinder 22 in the shaft 4 to supply inflating gas to air bags (not shown) for protecting the driver and the front seat passenger of the vehicle in the event of an accident thereto. As the cassette 6 is rotated with the steering wheel, the coil 8 of flat flexible cable FFC 7 simply coils or uncoils to compensate for the movement of the cassette, depending upon the direction of rotation of the steering wheel. Figures 1 and 2 illustrate the case where the cassette and thus the opening 14 are rotated through 90° in the direction of the arrow A in Figure 2. As mentioned above, the outer shaft 4 is stationary and so does not rotate with the cassette 6.

It may, from time to time, be necessary for the connector 18 to be unmated from the connector 20 on the cylinder 22, in order, for example, to allow testing of the sensors 12 or the cylinder 22 to be exchanged. When such work is being carried out there is the danger of the connector 18 being pulled, tightening up the coil 8 so that the connections 27 between the conductors of the cable and the terminals 28 of the connector 18 are impaired. These connections will usually be crimped connections according to the teaching of US-A-4,106,836, for example, which are described below. As shown in Figure 3, this disadvantage is avoided according to the present embodiment, by providing a strain relief sleeve 24 anchored at one end to the connector 18 and at its opposite end to the cassette 6. The strain relief sleeve 24 defines a through passage 26 which is substantially oversized relative to the flat flexible cable FFC of the lead portion 16, the height H of the passage 26 being preferably about twice the thickness of the cable FFC, that is to say about 0.50mm, the thickness of the cable being 0.25mm. In any event, relative axial movement between the cable and the sleeve 24 must be free. When the connector 18 is pulled in any direction, away from the cassette 6, the strain relief sleeve 24 elongates longitudinally, but only slightly, to absorb the load, and the flat flexible cable is free to move from the coil 8 towards the opening 14 to feed a little more of the cable FFC into the sleeve 24 to compensate for its elongation. Thus the connections 27 between the terminals 28 of the connector 18 and the conductors of the lead portion 16 are relieved of load despite the connector 18 being pulled away from the cassette 6.

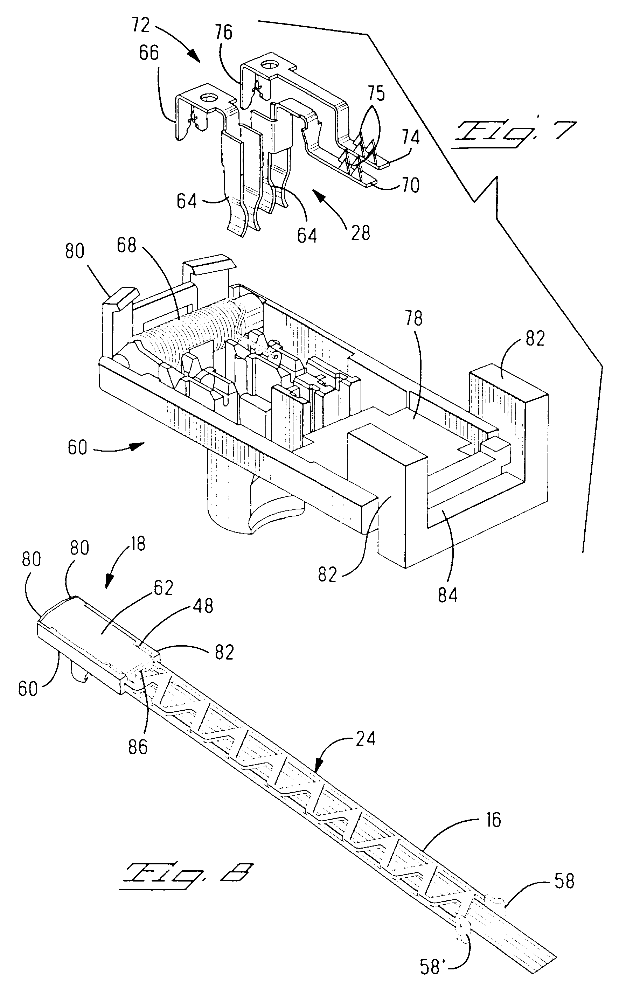

The strain relieve sleeve 24 will now be described in detail with reference to Figures 5 and 6. The sleeve 24 is an elongate, one piece, injection moulding of a stiffly resilient plastics material, for example, a soft nylon and can be produced by means of a simple two part tool. The strain relief sleeve 24 comprises a pair of longitudinally extending, rectangular cross section support strips 30 and 31, respectively, which are parallel to one another. The strips 30 and 31 are spanned throughout their length by a pair of opposed, parallel, spaced lattice structures 32 and 34, respectively, arranged in rotational symmetry. The passage 26, which is of elongate rectangular cross section is defined by the spacing between the support strips 30 and 31 and the lattice structures 32 and 34. Each lattice structure 32 and 34 comprises a series of V-shaped struts 36. The apices 38 of the struts 36 of the lattice structure 32 are connected to the strip 30, being formed integrally with the inner side 40 of the strip 30. The apices (not shown) of the struts 36 of the lattice structure 34 are similarly integrally formed with the inner side of the strip 31. The end, remote from the apex, of each leg 33 of each V-shaped strut is connected to a corresponding leg of the next adjacent V-shaped strut by a common base 42. The bases 42 of the struts 36 of the lattice structure 32 are formed integrally with the proximate upper edge 44 of the strip 31, the bases 42 of the struts of the lattice structure 34 similarly being formed integrally with proximate bottom edge of the strip 30. Since the lattice structures 32 and 34 are arranged in rotational symmetry, each of the strips 30 and 31 is in effect reinforced by the bases 34 which limits the extensibility of the strain relief sleeve 24.

At the left hand end (as seen in Figures 5 and 6), that is to say the connector end, of the strain relief sleeve 24, is an attachment member 46 comprising parallel cheeks 48 each formed integrally with a respective one of the support strips 30 and 31 and being spanned by a cross piece 50. Beneath the cross piece 50 the attachment member 46 defines a latching groove 52 extending transversely of the length of the sleeve 24. At its right hand end (as seen in Figures 5 and 6), the sleeve 24 is formed with an attachment member 54 comprising a pair of parallel cheeks 56 having at their free ends rounded dowels extending at right angles to the planes of the flat lattice structures.

As shown in Figures 7 and 8, the connector 18 comprises an insulating housing body 60 and a cover 62 therefor. The terminals 28 of the connector 18 comprise receptacles 64 for mating with pins 65 (Figure 3) of the connector 20. One of the receptacles 64 has a slotted plate contact 66 for receiving one end of the coil of a smoothing choke 68, the other of the receptacles 64 having a crimping contact 70 for crimping about a conductor of the lead portion 16 of the flat flexible cable. A further terminal 72 comprises a similar crimping contact 74 and a slotted plate contact 76 for receiving the other end of the choke coil. The contacts 70 and 74 have pointed lances 75 for insertion through the insulation of the cable and for crimping down to engage the cable conductors, according to the teaching for example, US-A-4,106,836.

The housing body 60 has cavities for receiving the respective terminals, a flat platform 78 for supporting the contacts 70 and 74, a pair of clips 80 for latching to the cover 62 and a pair of forward cheeks 82 spanned by a bar 84 for latching engagement in the groove 52 of the attachment member 46 of the sleeve 24. The cover 62 has a cable engaging lip 86. The flat platform 78 enabling the connector 18 to be terminated to the cable when the contacts are set in the housing 60, thereby allowing the connectors 19 to be delivered in partially assembled form and not requiring special tooling to terminate the cable.

The choke coil 68 is first assembled to the housing body 60, after which the terminals 28 and 72 are assembled to the housing body 60. The leading end of the lead portion 16 is passed through the passage 26 from the cassette end of the strain relief sleeve 24 as indicated by the arrow B in Figure 6, until the free leading end portion of the lead portion 16, after passing under the cross piece 50 projects from the connector end of the strain relief sleeve 24. The connector end of the sleeve 24 is then lowered into the forward end of the housing body 60 so that the bar 18 thereof is received in the groove 52 of the attachment member 46, with the projecting end part of the lead portion 16 lying on the lances 75 of the contacts 70 and 74. The lances 75 are then crimped down to complete the connections between the conductors of the lead portion 16 and their respective terminals. The cover 62 is then latched to the housing body 60 with the lip 86 disposed between the cheeks 82 and pressing the end part of the lead portion 16 down against the bar 84 with the cheeks 48 between the cheeks 82 as shown in Figure 8. The connector end of the strain relief sleeve 24 and the lead portion 16 are thereby fixedly secured to the connector 18. The cassette end of the strain relief sleeve 24 is then fixed to the cassette 6 by engagement of the dowels 58 in recesses 88 communicating with the opening 14 ( Figure 3) whereby the assembly of the strain relief sleeve to the connector 18 and the cassette 6 is completed.

## Claims

1. An air bag activating system in a vehicle having a steering column (2) with a fixed outer shaft (4) containing a cassette (6) which is rotatable with the steering wheel of the vehicle and an electrically actuable air bag activating assembly in the cassette (6), a coil (8) of multi-conductor flat flexible cable (7) between the cassette (6) and the outer shaft (4) having a first lead portion (10) connected to crash sensors (12) outside the shaft (4) and a second lead portion (16) extending freely through an opening (14) in the cassette (6), an electrical connector (18) for mating with the air bag activating assembly, containing electrical terminals each connected to a respective conductor of the second lead portion (16), the coil (8) of flat flexible cable (7) being coilable and uncoilable to compensate for the rotation of the steering wheel when the connector is mated with said assembly, a strain relief being provided to strengthen the cable characterized in that the strain relief is a strain relief sleeve (24) defining a passage (26) through which the second lead portion (16) extends is fixed at one end to the cassette (6) and at its other end to the connector (18), the strain relief sleeve (24) being stiffly expansible to absorb the load when the connector (18) is pulled away from the cassette (6) and the passage (26) being dimensioned to allow the cable (7) to pass freely therethrough thereby to relieve the connections between the cable conductors and the terminals, of load, when the connector is so pulled.

2. An air bag activating system as claimed in claim 1, characterized in that the one end (54) of the strain relief sleeve (24) is fixed in a recess (88) communicating with the opening (14) in the cassette (6) through which the second lead portion (16) extends.

3. An air bag activating system as claimed in claim 1 or 2, characterized in that the other end (46) of the strain relief sleeve (24) is confined between a housing body (60) of the connector (18) and a cover (62) thereof.

4. An air bag activating system as claimed in claim 1, 2 or 3, characterized in that the height (H) of the passage (26) in the sleeve (24) is about twice the thickness of the flat flexible cable (16).

5. An air bag activating system as claimed in any one of the preceding claims, characterized in that the strain relief sleeve (24) comprises a pair of spaced lattice structures (32,34) formed integrally with a pair of parallel spaced support strips (30,31), inner surfaces of the lattice structures (32,34) and the support strip (30,31) defining the passage (26) of the strain relief sleeve (24) .

6. An airbag activating system as claimed in anyone of the preceding claims, characterized in that the strain relief sleeve (24) is one moulded piece made of a stiffly resilient material and comprising a pair of spaced, parallel, longitudinally extending strips (30,31) connected together by a pair of spaced, longitudinally extending, flat, parallel lattice structures (32,34) each connected to both of said strips (30,31), the strips (30,31) and the lattice structures (32,34) cooperating to define a longitudinal through passage (26) of elongate cross section for receiving therethrough, with clearance, a length of flat flexible cable (16), attachment means (50,58) being provided at each end (46,58) of the sleeve (24).

7. An airbag activating system as claimed in claim 6, characterized in that each lattice structure (32,34) is connected to an inner side of one of said strips (30,31) and to an edge of the other strip, adjacent to said inner side.

8. An airbag activating system as claimed in claim 6 or claim 7, characterized in that each lattice structure (32,34) comprises a series of V-shaped struts (36), the apices (38) of the struts (36) in each lattice structure (32,34) being connected to the inner side (40) of a respective one of the strips (30,31) and the legs (33) of the V-shaped struts (36) of each lattice structure (32,34) being connected to an edge of a respective other one of the strips.

9. An airbag activating system as claimed in any one of claims 6 to 8, characterized in that the attachment means at one end of the strain relief sleeve (24) comprises a pair of dowels (58), one on each side of the passage (26) and extending transversely of the planes of the flat lattice structures (32,34) and the attachment means (46) at the other end of the strain relief sleeve (24) comprises a pair of cheeks (48) extending transversely of the plane of the flat lattice structures (32,34) and a cross piece (50) spanning the cheeks (48).

## Patentansprüche

1. Aktivierungssystem für einen Airbag in einem Fahrzeug, das aufweist: eine Lenksäule (2) mit einer stationären äußeren Welle (4), die eine Kassette (6), die mit dem Lenkrad des Fahrzeuges drehbar ist, und eine elektrisch betätigbare Airbag-Aktivierungsbaugruppe in der Kassette (6) enthält; eine Spule (8) des flachen biegsamen Mehrleiterkabels (7) zwischen der Kassette (6) und der äußeren Welle (4) mit einem ersten Leitungsabschnitt (10), der mit Unfallmeßfühlern (12) außerhalb der Welle (4) verbunden ist, und einem zweiten Leitungsabschnitt (16), der sich ungehindert durch eine Öffnung (14) in der Kassette (6) erstreckt; einen elektrischen Verbinder (18) für einen Eingriff mit der Airbag-Aktivierungsbaugruppe, die elektrische Anschlußklemmen enthält, von denen jede mit einem entsprechenden Leiter des zweiten Leitungsabschnittes (16) verbunden ist, wobei die Spule (8) des flachen biegsamen Kabels (7) auf- und abwickelbar ist, um die Drehung des Lenkrades auszugleichen, wenn der Verbinder mit der Baugruppe in Eingriff ist, wobei eine Zugentlastung bereitgestellt wird, um das Kabel zu verfestigen; dadurch gekennzeichnet, daß die Zugentlastung eine Zugentlastungsmuffe (24) ist, die einen Durchgang (26) begrenzt, durch den sich der zweite Leitungsabschnitt (16) erstreckt; daß sie an einem Ende an der Kassette (6) und an ihrem anderen Ende am Verbinder (18) befestigt ist, wobei die Zugentlastungsmuffe (24) starr dehnbar ist, um die Last aufzunehmen, wenn der Verbinder (18) von der Kassette (6) weggezogen wird, und wobei der Durchgang (26) so dimensioniert ist, daß das Kabel (7) ungehindert hindurchgehen kann, um dadurch die Verbindungen zwischen den Kabelleitern und den Anschlußklemmen von der Last zu befreien, wenn der Verbinder so gezogen wird.

2. Aktivierungssystem für einen Airbag nach Anspruch 1, dadurch gekennzeichnet, daß das eine Ende (54) der Zugentlastungsmuffe (24) in einer Aussparung (88) befestigt ist, die mit der Öffnung (14) in der Kassette (6) verbunden ist, durch die sich der zweite Leitungsabschnitt (16) erstreckt.

3. Aktivierungssystem für einen Airbag nach Anspruch 1 oder 2, dadurch gekennzeichnet, daß das andere Ende (46) der Zugentlastungsmuffe (24) zwischen einem Gehäusekörper (60) des Verbinders (18) und einer Abdeckkappe (62) dieses eingeschlossen ist.

4. Aktivierungssystem für einen Airbag nach Anspruch 1, 2 oder 3, dadurch gekennzeichnet, daß die Höhe (H) des Durchganges (26) in der Muffe (24) etwa das Doppelte der Dicke des flachen biegsamen Kabels (16) ist.

5. Aktivierungssystem für einen Airbag nach einem der vorhergehenden Ansprüche, dadurch gekennzeichnet, daß die Zugentlastungsmuffe (24) ein Paar mit Abstand angeordnete Gitterkonstruktionen (32, 34) aufweist, die zusammenhängend mit einem Paar paralleler mit Abstand angeordneter Haltestreifen (30, 31) ausgebildet sind, wobei die inneren Flächen der Gitterkonstruktionen (32, 34) und der Haltestreifen (30, 31) den Durchgang (26) der Zugentlastungsmuffe (24) begrenzen.

6. Aktivierungssystem für einen Airbag nach einem der vorhergehenden Ansprüche, dadurch gekennzeichnet, daß die Zugentlastungsmuffe (24) ein einteiliges geformtes Teil aus einem steif elastischen Material ist und ein Paar mit Abstand angeordnete parallele, sich in Längsrichtung erstreckende Streifen (30, 31) aufweist, die durch ein Paar mit Abstand angeordnete, sich in Längsrichtung erstreckende flache parallele Gitterkonstruktionen (32, 34) miteinander verbunden sind, wobei jede mit beiden Streifen (30, 31) verbunden ist, wobei die Streifen (30, 31) und die Gitterkonstruktionen (32, 34) zusammenwirken, um einen Längsdurchgang (26) von länglichem Querschnitt für die Aufnahme einer Länge des flachen biegsamen Kabels (16) darin mit Spiel zu begrenzen, wobei eine Befestigungseinrichtung (50, 58) an jedem Ende (46, 58) der Muffe (24) bereitgestellt wird.

7. Aktivierungssystem für einen Airbag nach Anspruch 6, dadurch gekennzeichnet, daß jede Gitterkonstruktion (32, 34) mit einer Innenseite des einen der Streifen (30, 31) und mit einem Rand des anderen Streifens, angrenzend an die Innenseite, verbunden ist.

8. Aktivierungssystem für einen Airbag nach Anspruch 6 oder Anspruch 7, dadurch gekennzeichnet, daß jede Gitterkonstruktion (32, 34) eine Reihe von V-förmigen Streben (36) aufweist, wobei die Scheitelpunkte (38) der Streben (36) in jeder Gitterkonstruktion (32, 34) mit der Innenseite (40) eines entsprechenden der Streifen (30, 31) verbunden sind, und wobei die Schenkel (33) der V-förmigen Streben (36) einer jeden Gitterkonstruktion (32, 34) mit einem Rand eines entsprechenden anderen der Streifen verbunden sind.

9. Aktivierungssystem für einen Airbag nach einem der Ansprüche 6 bis 8, dadurch gekennzeichnet, daß die Befestigungseinrichtung an einem Ende der Zugentlastungsmuffe (24) ein Paar Zapfen (58) aufweist, einer auf jeder Seite des Durchganges (26), wobei sie sich quer der Ebenen der flachen Gitterkonstruktionen (32, 34) erstrecken; und daß die Befestigungseinrichtung (46) am anderen Ende der Zugentlastungsmuffe (24) ein Paar Backen (48), die sich quer der Ebene der flachen Gitterkonstruktionen (32, 34) erstrecken, und eine Querstrebe (50) aufweist, die die Backen (48) überspannt.

## Revendications

1. Système d'activation d'un sac gonflable (coussin d'air) dans un véhicule comportant une colonne de direction (2) avec un arbre externe fixe (4), contenant une cassette (6) pouvant tourner avec le volant du véhicule, et un ensemble d'activation d'un sac gonflable à commande électrique dans la cassette (6), une bobine (8) de câble multiconducteur flexible plat (7) entre la cassette (6) et l'arbre externe (4) comportant une première partie conductrice (10) connectée à des capteurs de collision (12) agencés à l'extérieur de l'arbre (4), et une deuxième partie conductrice (16) s'étendant librement à travers une ouverture (14) dans la cassette (6), un connecteur électrique (18) destiné à être accouplé à l'ensemble d'activation du sac gonflable, contenant des bornes électriques, connectées chacune à un conducteur respectif de la deuxième partie conductrice (16), la bobine (8) du câble flexible plat (7) pouvant être enroulée et déroulée pour compenser la rotation du volant lors de l'accouplement du connecteur audit ensemble, un élément de décharge de traction étant prévu pour renforcer le câble, caractérisé en ce que l'élément de décharge de traction est un manchon de décharge de traction (24) définissant un passage (26) à travers lequel s'étend la deuxième partie conductrice (16), fixé au niveau d'une extrémité à la cassette (6) et au niveau de son autre extrémité au connecteur (18), le manchon de décharge de traction (24) pouvant être étendu de manière rigide pour absorber la charge lorsque le connecteur (18) est tiré à l'écart de la cassette (6), le passage (26) étant dimensionné de sorte à permettre le passage libre du câble (7) à travers celui-ci, pour décharger ainsi les connexions entre les conducteurs du câble et les bornes de la charge lors d'une telle traction du connecteur.

2. Système d'activation d'un sac gonflable selon la revendication 1, caractérisé en ce qu'une extrémité (54) du manchon de décharge de traction (24) et fixée dans un évidement (88) communicant avec l'ouverture (14) dans la cassette (6) à travers laquelle s'étend la deuxième partie conductrice (16).

3. Système d'activation d'un sac gonflable selon les revendications 1 ou 2, caractérisé en ce que l'autre extrémité (46) du manchon de décharge de traction (24) est confinée entre un corps de boîtier (60) du connecteur (18) et un couvercle correspondant (62).

4. Système d'activation d'un sac gonflable selon les revendications 1, 2 ou 3, caractérisé en ce que la hauteur (H) du passage (26) dans le manchon (24) représente environ le double de l'épaisseur du câble flexible plat (16).

5. Système d'activation d'un sac gonflable selon l'une quelconque des revendications précédentes, caractérisé en ce que le manchon de décharge de traction (24) comprend une paire de structures en treillis espacées (32, 34) formées intégralement avec une paire de bandes de support parallèles espacées (30, 31), les surfaces internes des structures en treillis (32, 34) et la bande de support (30, 31) définissant le passage (26) du manchon de décharge de traction (24).

6. Système d'activation d'un sac gonflable selon l'une quelconque des revendications précédentes, caractérisé en ce que le manchon de décharge de traction (24) est constitué par une pièce moulée composée d'un matériau à élasticité rigide et comprenant une paire de bandes espacées, parallèles, à extension longitudinale (30, 31), connectées par une paire de structures en treillis espacées, à extension longitudinale, plates et parallèles (32, 34), connectées chacune aux deux dites bandes (30, 31), les bandes (30, 31) et les structures en treillis (32, 34) coopérant pour définir un passage longitudinal (26) ayant une section transversale allongée, pour recevoir de manière dégagée à travers celui-ci une longueur du câble flexible plat (16), un moyen de fixation (50, 58) étant agencé au niveau de chaque extrémité (45, 58) du manchon (24).

7. Système d'activation d'un sac gonflable selon la revendication 6, caractérisé en ce que chaque structure en treillis (32, 34) est connectée à un côté interne d'une desdites bandes (30, 31) et à un bord de l'autre bande, adjacent audit côté interne.

8. Système d'activation d'un sac gonflable selon les revendications 6 ou 7, caractérisé en ce que chaque structure en treillis (32, 34) comprend une série d'entretoises en V (36), les sommets (38) des entretoises (36) dans chaque structure en treillis (32, 34) étant connectés au côté interne (40) d'une des bandes respectives (30, 31) et les branches (33) des entretoises en V (36) de chaque structure en treillis (32, 34) étant connectées à un bord d'une autre des bandes respectives.

9. Système d'activation d'un sac gonflable selon l'une quelconque les revendications 6 à 8, caractérisé en ce que le moyen de fixation au niveau d'une extrémité du manchon de décharge de traction (24) comprend une paire de goujons (58), un sur chaque côté du passage (26), s'étendant transversalement aux plans des structures en treillis plates (32, 34), le moyen de fixation (46) au niveau de l'autre extrémité du manchon de décharge de traction (24) comprenant une paire de joues (48) s'étendant transversalement au plan des structures en treillis plates (32, 34), une traverse (50) enjambant les joues (48).
